# EUROPÄISCHE PATENTANMELDUNG

(11) **EP 1 035 047 A2**
(43) Veröffentlichungstag der Anmeldung: **13.09.2000**
(21) Anmeldenummer: 00104296.9
(22) Anmeldetag: 01.03.2000
(51) Int. Cl.: B65G 19/02

(54) **Waren-, Lager-, Förder- und Umschlagsystem für auf Hängeträgern gehaltene Waren**

(30) Priorität: 12.03.1999 DE 19911144
(71) Anmelder: WF Logistik GmbH, 86899 Landsberg (DE)
(72) Erfinder: Schönenberger, Rolf, 86899 Landsberg (DE)
(74) Vertreter: Jordan, Volker, Dr.

(57) **Zusammenfassung**

Die Erfindung betrifft ein Waren-, Lager-, Förder- und Umschlagsystem (10) für auf Hängeträgern, insbesondere Hängebügeln, gehaltene Waren. Das System weist wenigstens eine Umschlagstation (16) auf, die sowohl als Eingangsstation für in das System einzugebende Eingangswaren als auch als Ausgangsstation für vom System an ein externes Transportmittel abzugebende Ausgangswaren nutzbar ist. Die Umschlagstation ist über eine Hängefördereranordnung (14) an einem Warenspeicher (12) angeschlossen oder anschließbar, der sowohl als Eingangswaren aufnehmender Eingangsspeicher als auch als Ausgangswaren aufnehmender Ausgangsspeicher nutzbar ist.

## Beschreibung

Die vorliegende Erfindung bezieht sich auf ein Waren-, Lager-, Förder- und Umschlagsystem für auf Hängeträgern, insbesondere Hängebügeln (ggf. Kleiderbügeln) gehaltene Waren, insbesondere Textilien, umfassend:
- wenigstens einen Warenspeicher mit mindestens einer Speicherstrecke, ggf. einem Speicherring, die Hängeträger samt daran gehaltener Ware (sowie gewünschtenfalls leere Hängeträger) aufnimmt,
- wenigstens eine Warenumschlagstation zum Umschlagen von Hängeträgern samt daran gehaltener Ware zwecks Übergang der Waren zwischen dem System und einem externen Transportmittel, insbesondere Lastkraftwagen oder/und Transportcontainer,
- eine Hängefördereranordnung mit wenigstens einem Hängeförderer zum Fördern der (beladenen bzw. leeren) Hängeträger längs wenigstens einer Förderstrecke des Systems zwischen dem Warenspeicher und der Warenumschlagstation.

Derartige Systeme kommen in der Herstellungs-, Umschlags-, Transport-, Lager- und Vertriebskette zwischen einem Hersteller von Waren, wie beispielsweise Textilien, und dem Endverbraucher zum Einsatz. Ein solches System könnte beispielsweise in eine Fabrik für Textilien oder andere Ware integriert sein und dazu dienen, die dort produzierten Waren zu lagern, bis diese für den Transport zu einem Zwischenhändler oder zu einer Verkaufsstätte abgerufen und in ein entsprechendes Transportmittel umgeschlagen werden. Ferner kann das System dazu dienen, in der Fabrik weiterzuverarbeitende Ware in Empfang zu nehmen und bis zur Weiterverarbeitung zwischenzuspeichern. Ferner kann es vorkommen, daß über das System abgegebene Ware zu einem späteren Zeitpunkt zurückgenommen werden muß, beispielsweise weil einzelne Warenteile fehlerhaft sind oder es nicht gelang, alle ausgegebenen Warenteile an den Endverbraucher zu verkaufen. Dies kann beispielsweise im Falle von Textilien dadurch verursacht sein, daß das Käuferverhalten anders war als erwartet, etwa aufgrund einer falschen Einschätzung des Modetrends oder aufgrund von Witterungseinflüssen.

Bei einem derartigen System stellen sich komplizierte logistische Aufgaben bei der Verwaltung und Beherrschung der eingehenden und ausgehenden Warenströme. Dies gilt umso mehr, wenn es sich bei der Ware um in verschiedenen Ausgestaltungen produzierte Massenartikel wie Textilien handelt, bei denen regelmäßig zumindest verschiedene Kleidungsgrößen, häufig aber auch verschiedene Modelle hergestellt werden. Zur Begrenzung der Komplexität des Systems hat man herkömmlich das System derart ausgelegt, daß stets vorgegebene und eindeutige Warenströme mit vorgegebener Stromrichtung aufrechterhalten werden. Dementsprechend hat man das System mit einem gesonderten Eingangsspeicher, der ins System eingegebene Eingangswaren aufnimmt, und mit einem gesonderten Ausgangsspeicher, der vom System nach außen (zum externen Transportmittel) abzugebende Ausgangswaren aufnimmt, ausgebildet. Dabei waren dem Eingangsspeicher und dem Ausgangsspeicher jeweils gesonderte Förderstrecken zugeordnet, nämlich den Ausgangsspeicher mit wenigstens einer zugeordneten Ausgangswarenumschlagstation verbindende Ausgangswarenförderstrecken und den Eingangawarenspeicher mit wenigstens einer zugeordneten Eingangswarenumschlagstation verbindende Eingangswarenförderstrecken.

Die Eingangswaren und die Ausgangswaren durchlaufen herkömmlich also das System stets getrennt voneinander, wobei die die Warenspeicher und die Warenumschlagstationen verbindende Hängefördereranordnung derart ausgebildet ist, daß entlang ihrer Förderstrecken nur jeweils eine vorgegebene Förderrichtung der jeweils geförderten Waren (Eingangswaren oder Ausgangswaren) auftritt. Es liegt auf der Hand, daß der beschriebene herkömmliche Aufbau derartiger Systeme mit gesondertem Eingangsspeicher und gesondertem Ausgangsspeicher von der Logistik und dem Dirigieren der Warenströme her gesehen vorteilhaft ist und eine hohe Warenumschlagfrequenz ermöglicht.

Es hat sich nun aber gezeigt, daß eine Abkehr von diesem Grundprinzip einer gesonderten Lagerung, Förderung und eines gesonderten Umschlags von Eingangswaren und Ausgangswaren keine unüberwindbaren logistischen Probleme (insbesondere hinsichtlich des Dirigierens derverschiedenen Warenströme) verursacht und überdies im Hinblick auf eine höhere Flexibilität des Systems und eine optimierte Ausnutzung der Lager-, Förder- und Umschlagresourcen vorteilhaft ist. Dementsprechend sieht die Erfindung vor, daß die Umschlagstation derart ausgebildet ist, daß sie sowohl als Eingangsstation nutzbar ist, die ins System einzugebende Eingangswaren vom externen Transportmittel übernimmt, als auch als Ausgangsstation nutzbar ist, die nach außen abzugebende Ausgangswaren an das externe Transportmittel übergibt, und daß die Hängefördereranordnung und der Warenspeicher derart ausgebildet sind, daß der Warenspeicher sowohl als über die Warenumschlagstation ins System eingegebene Eingangswaren aufnehmender Eingangsspeicher als auch über die Warenumschlagstation nach außen abzugebende Ausgangswaren aufnehmender Ausgangsspeicher nutzbar ist.

Dadurch, daß der Warenspeicher mehrfunktional sowohl als Eingangsspeicher als auch als Ausgangsspeicher nutzbar ist, kann das System flexibel unterschiedlichsten Betriebssituationen gerecht werden, beispielsweise - bezogen auf die apparative Speicherkapazität des Systems als solche - zu einem Zeitpunkt, wenn der Bedarf zur Speicherung von Eingangswaren geringer ist, eine deutlich größere Menge an Ausgangswaren speichern und zu einem anderen Zeitpunkt, wenn umgekehrt der Bedarf für die Speicherung von Ausgangswaren geringer ist, eine deutlich größere Menge an Eingangswaren speichern. Die Anforderungen hinsichtlich der Speicherkapazität für Eingangswaren und Ausgangswaren kann saisonal oder auch im Laufe eines Tages schwanken. Beispielsweise könnte es so sein, daß am Morgen Ausgangswaren umgeschlagen werden (wodurch der Warenspeicher zumindest teilweise entleert wird), während Eingangswaren beispielsweise am Nachmittag umgeschlagen werden (wodurch der Speicher wieder gefüllt wird). Insgesamt gesehen, ist der apparative und räumliche Aufwand für die Warenspeicheranordnung und die Hängefördereranordnung gegenüber einem herkömmlichen System mit entsprechender Lagerkapazität deutlich reduziert.

Große Vorteile ergeben sich auch daraus, daß auch die wenigstens eine Warenumschlagstation mehrfunktional sowohl als Eingangsstation, als auch als Ausgangsstation nutzbar ist. Einerseits wird man häufig mit einer geringeren Anzahl von Warenumschlagstationen auskommen, da diese nun entsprechend der jeweiligen (sich zeitlich ändernden) Betriebssituation für den Umschlag von Eingangswaren oder den Umschlag von Ausgangswaren eingesetzt werden kann. Es ist sogar möglich, die jeweilige Umschlagstation gleichzeitig oder in unmittelbarer Folge aufeinander als Eingangsstation und Ausgangsstation zu verwenden. Beispielsweise könnte derselbe Lkw dafür verwendet werden, einerseits Eingangswaren dem System zuzuführen und andererseits Ausgangswaren vom System zu übernehmen. Dies könnte beides an der gleichen Umschlagstation erfolgen, in der Regel derart, daß zuerst die Eingangswaren ins System eingegeben werden und anschließend die Ausgangswaren vom System übernommen werden. Bezogen auf die apparativen und räumlichen Umschlagresourcen als solche, erhält man eine deutlich vergrößerte Umschlagkapazität bzw. Umschlagfrequenz.

Bevorzugt ist der Warenspeicher derart ausgebildet, daß wenigstens eine Speicherstrecke des Warenspeichers derart an der Hängefördereranordnung angeschlossen ist, daß die Speicherstrecke Eingangswaren von der Hängefördereranordnung übernehmen kann und Ausgangswaren an die Hängefördereranordnung abgeben kann (bidirektionaler Anschluß an der Hängefördereranordnung).

Vorzugsweise ist auch die Hängefördereranordnung derart ausgebildet, daß sie flexibel einsetzbar ist. Hierzu wird vorgeschlagen, daß wenigstens eine Förderstrecke der Hängefördereranordnung dafür ausgelegt ist, sowohl Eingangswaren in Richtung zum Warenspeicher zuzuführen als auch Ausgangswaren in Richtung zur Warenumschlagstation abzuführen.

Hinsichtlich der Ausbildung des Warenspeichers bestehen grundsätzlich viele Möglichkeiten. Als besonders bevorzugt wird vorgeschlagen, daß wenigstens eine Speicherstrecke des Warenspeichers für eine Bewegung von Hängeträgern samt daran gehaltener Ware in beiden Richtungen längs der Speicherstrecke ausgebildet ist. Dabei kann die Speicherstrecke an einem Ende bidirektional an der Hängefördereranordnung angeschlossen sein. Bidirektional in diesem Zusammenhang heißt, daß die Speicherstrecke zur Übernahme von Eingangswaren und zur Abgabe von Ausgangsware an der Hängefördereranordnung angeschlossen ist. Dabei kann die Speicherstrecke derart ausgebildet sein, daß die Hängeträger für Eingangswaren einerseits und die Hängeträger für Ausgangswaren andererseits an gesonderten, parallel verlaufenden und der gleichen Speicherstrecke zugeordneten Tragelementen mittelbar oder unmittelbar gehalten werden.

Als besonders bevorzugt wird vorgeschlagen, daß die Speicherstrecke an einem Ringförderer der Hängefördereranordnung bidirektional angeschlossen ist. Durch den Einsatz wenigstens eines Ringförderers (ggf. Kreisförderers bzw. Kreisels) kann die Struktur der Hängefördereranordnung vergleichsweise einfach gehalten werden.

Wenn hier vom Anschluß einer Förderstrecke oder Speicherstrecke an einer (anderen) Förderstrecke bzw. an einem Förderer die Rede ist, so heißt dies nicht, daß eine unmittelbare Verbindung zwischen den aneinander angeschlossenen Systemteilen erforderlich ist. Es kann auch sein, daß nur ein mittelbarer Anschluß, etwa über eine dazwischenliegende Förderstrecke, ggf. über Verbindungsförderer, vorgesehen ist.

Im Hinblick auf eine hohe Flexibilität des Systems ist es vorteilhaft, wenn mehrere Speicherstrecken des Warenspeichers mit einer gemeinsamen Umschlagstation oder mit mehreren gemeinsamen Umschlagstationen bidirektional (zur Übernahme von Eingangsware und zur Abgabe von Ausgangsware) in Förderverbindung stehen oder bringbar sind. Umgekehrt trägt zu einer hohen Flexibilität des Systems ebenso bei, wenn mehrere Umschlagstationen mit einer oder mehreren Speicherstrecken des Warenspeichers bidirektional (zum Empfang von Ausgangsware und zur Übergabe von Eingangsware) in Förderverbindung stehen oder bringbar sind. Die Förderverbindung erfolgt vorzugsweise über wenigstens einen gemeinsamen Förderer der Hängefördereranordnung. Als gemeinsamer Förderer ist insbesondere der schon erwähnte Ringförderer vorteilhaft einsetzbar, da er die Struktur der Hängefördereranordnung einfach hält. Die Speicherstrecke bzw. Umschlagstationen können, wie schon erwähnt, direkt oder über eine jeweilige Zwischenförderstrecke am gemeinsamen Förderer, insbesondere Ringförderer, angeschlossen sein. Im Bereich des gemeinsamen Förderers können Barcodeleser oder dergleichen vorgesehen sein, die die eingehenden Eingangswaren oder/und die ausgehenden Ausgangswaren erfassen. Auf gesonderte Barcodeleser oder dergleichen in den Umschlagstationen bzw. an den Speicherstrecken des Warenspeichers kann dann unter Umständen verzichtet werden.

Besonders zweckmäßig ist es, wenn eine Übergabeanordnung vorgesehen ist, mittels der gezielt eine bidirektionale Förderverbindung zwischen einer bestimmten Speicherstrecke einerseits und einer bestimmten Umschlagstation bzw. einem der Umschlagstation für den Warenumschlag zugeordneten Transportmittel oder/und einer bestimmten Förderstrecke bzw. Halteanordnung (ggf. Haltestrecke) der Umschlagstation bzw. eines/des der Umschlagstation für den Warenumschlag zugeordneten Transportmittels andererseits einstellbar ist. Die Übergabeanordnung kann eine Mehrzahl von gesonderten, stationär angeordneten und jeweils genau einer Speicherstrecke bzw. Umsohlagstation im Sinne eines bidirektionalen Anschlusses der Speicherstrecke, der Umsohlagstation, des Transportmittels, der Förderstrecke bzw. der Halteanordnung an den gemeinsamen Förderer zugeordnete Übergabestationen umfassen.

Alternativ oder zusätzlich wird als besonders vorteilhaft vorgeschlagen, daß die Übergabeanordnung wenigstens eine längs einer Verschiebestrecke in eine Mehrzahl von Übergabepositionen verschiebbare Übergabestation umfaßt, wobei die Übergabepositionen jeweils wenigstens einer, ggf. genau einer bestimmten Speicherstrecke bzw. Umschlagstation oder/und Förderstrecke bzw. Halteanordnung im Sinne eines bidirektionalen Anschlusses am gemeinsamen Förderer zugeordnet sind. Durch die verschiebbare Übergabestation kann der apparative Aufwand an Weichen, Förderern und dgl. klein gehalten werden, da ihre Funktionen von der Übergabestation übernommen werden, die wahlweise entsprechend dem einzustellenden Warenstrom (Eingangswaren oder/und Ausgangswaren) oder/und der ausgewählten Umschlagstation bzw. der jeweiligen Speicherstrecke bzw. Förderstrecke bzw. Haltestrecke in eine bestimmte Übergabeposition bringbar ist. Ohne die verschiebbare Übergabestation hätte man für eine vorgegebene Anzahl von Speicherstrecken, Förderstrecken, Haltestrecken bzw. Umschlagstationen für jede Übergabeposition eine gesonderte stationäre Umschlagstation vorsehen müssen mit entsprechend höherem apparativem Aufwand.

Besondere Vorteile ergeben sich dann, wenn die Übergabestation dafür geeignet ist, eine direkte Hängeträgerübergabeverbindung zwischen Haltestangen oder dergleichen des der Umschlagstation zugeordneten Transportmittels (Lkw oder Container bzw. sog. Koffer) und dem gemeinsamen Förderer herzustellen. Bei den Haltestangen handelt es sich bevorzugt um sich in Längsrichtung des Lkw bzw. Containers erstreckende Stangen. Das Transportmittel kann dann gewissermaßen mit einem eine Ladeöffnung aufweisenden Ende an der Übergabestation "andocken', vorzugsweise derart, daß ein direkter Anschluß zwischen den Längsstangen des Transportmittels und zugeordneten Fördermitteln der Übergabestation hergestellt ist. Bei einer derartigen Ausbildung der Umschlagstation und des Fördermittels ist es möglich, einen rein maschinellen Umschlag vorzusehen oder zumindest die manuellen Handhabungsvorgänge auf ein Minimum zu reduzieren.

Die jeweilige Übergabestation (stationäre Übergabestation bzw. verschiebbare Übergabestation) kann wenigstens eine Weichenanordnung oder/und Rutschstangenanordnung oder/und Mitnahmefördereranordnung umfassen. Bei der Übergabefördereranordnung kann es sich beispielsweise um eine Band-, Gurt-, Seil- oder Kettenfördereranordnung handeln. Innerhalb der übergabestation können gesonderte, entgegengesetzten Förderrichtungen zugeordnete Übergabeförderstrecken vorgesehen sein, beispielsweise eine Übergabeförderstrecke für Eingangswaren und eine Übergabeförderstrecke für Ausgangswaren. Den Übergabeförderstrecken können gesonderte Fördermittel zugeordnet sein, beispielsweise eine Rutschstange für die eine Förderrichtung und ein Mitnahmeförderer für die andere Förderrichtung.

Wenn hier von einem Mitnahmeförderer die Rede ist, so wird vor allem an einen Förderer mit einen, langgestreckten Mitnahmeelement, insbesondere Band, Gurt, Seil oder Kette, gedacht, das direkt oder indirekt an zu fördernden Hängeträgern angreift.

Allgemein wird vorgeschlagen, daß wenigstens ein Hängeförderer der Hängefördereranordnung oder/und wenigstens ein Hängeförderer einer Umschlagstation (insbesondere ein in einen Ladebaum der Umschlagstation integrierter Hängeförderer) oder/und wenigstens ein Hängeförderer des Warenspeichers (insbesondere ein wenigstens einer Speicherstrecke zugeordneter Hangeförderer) als Mitnahmeförderer der genannten Art mit einem langgestreckten Mitnahmeelement ausgebildet ist.

In diesem Zusammenhang wird vorgeschlagen, daß das Mitnahmeelement unter Ausbildung zweier parallel längs einer gemeinsamen Förderstrecke bzw. Speicherstrecke geführten, in entgegengesetzte Förderrichtungen laufenden und zur Förderung von Hängeträgern längs der Förderstrecke bzw. Speicherstrecke geeigneten Mitnahmeelementtrume in einer Endlosschleife geführt ist. Dabei kann die Führung des Mitnahmeelements derart sein, daß beide Mitnahmeelementtrume gleichzeitig Hängeträger fördern können. Es ist aber auch möglich, daß die Führung des Mitnahmeelements insbesondere hinsichtlich eines Abstands zwischen diesen derart ist, daß zu einem Zeitpunkt nur entweder der eine Mitnahmeelementtrum oder der andere Mitnahmeelementtrum Hängeträger fördern kann. Vorzugsweise sind die beiden Mitnahmeelementtrume in Horizontalrichtung gegeneinander versetzt und verlaufen wenigstens näherungsweise in einer gemeinsamen Horizontalebene. Die Ausbildung des Mitnahmeförderers mit zwei parallel längs einer gemeinsamen Förderstrecke geführten und beide zur Förderung von Hängeträgern geeigneten Mitnahmeelementtrumen ist ein von der erfindungsgemäßen Ausbildung des Waren-, Lager-, Förder- und Umschlagsystems eigenständiger Aspekt der vorliegenden Erfindung, für den es sich die Anmelderin vorbehält, eigenständigen Schutz anzustreben.

In Zusammenhang mit der Ausbildung des wenigstens einen Hängeförderers als Mitnahmeförderer wird als besonders bevorzugt vorgeschlagen, daß die Förderrichtung des Mitnahmeförderers umschaltbar ist. Hierdurch ergeben sich große Vorteile auch hinsichtlich der Handhabung von Hängeträgern der Art wie Kleiderbügel mit einem in eine Querrichtung offenen und in die entgegengesetzte Querrichtung geschlossenen Einhängabschnitt. Herkömmlich müssen die Hängeträger eine vorgegebene Orientierung relativ zu einer Förderstrecke einnehmen, damit sie entlang einem Förderschienenabschnitt gefördert werden können und an einem Förder-/Halteschienenabschnitt anhängbar und an einem Förder-/Halteschienenabschnitt abhängbar sind. Genauer: die Hängeträger müssen eine vorgegebene von zwei möglichen Orientierungen relativ zu einer Förderstrecke einnehmen. Durch Umschalten der Förderrichtung des Mitnahmeförderers wird es nun möglich, sowohl für Eingangsware, als auch für Ausgangsware Hängeträger beider Orientierungen längs der jeweiligen Förderstrecke zu fördern.

Als vorteilhafte Weiterbildung des Systems wird vorgeschlagen, daß wenigstens eine Umschlagstation einen Hängeförderer in Form einer Rutschstange aufweist. Mittels einer Rutschstange ist bei nur geringem apparativem Aufwand eine Förderung der Hängeträger beispielsweise unter Ausnutzung von Schwerkraft oder/und durch manuelles Schieben längs der Rutschstange möglich. Vorzugsweise ist die Rutschstange an die Hängefördereranordnung angeschlossen oder anschließbar, derart, daß Hängeträger von der Hängefördereranordnung automatisiert an die Rutschstange übergebbar oder/und von der Rutschstange automatisiert oder/und durch manuelles Übergabeschieben an die Hängefördereranordnung übergebbar sind.

Eine besonders zweckmäßige Ausbildung der Rutschstange der Umschlagstation zeichnet sich dadurch aus, daß die Rutschstange als Rutschschleife ausgeführt ist, die sowohl an einem ersten Schleifenende als auch an einem zweiten Schleifenende an der Förderanordnung angeschlossen oder anschließbar ist. Eine sölche Rutschstangenschleife kann beispielsweise in Umschlagstationen verwendet werden, die zum Umschlag von Waren in kleineren Losen (Stückzahlen) verwendet werden, beispielsweise zur Belieferung von kleineren Verkaufsstellen. Auf einen in der Umschlagstation vorgesehenen Ladebaum mit integriertem Mitnahmeförderer oder dgl. kann dann verzichtet werden. Der Warenumschlag kann rein manuell durch Umhängen der Ware zwischen der Rutschstange und Hängestangen oder dgl. des Transportmittels erfolgen.

Insbesondere im Hinblick auf den Umschlag von Waren in größeren Losen oder einer großen Zahl von Wareneinzelteilen ist es aber bevorzugt, daß wenigstens eine Umschlagstation einen den Warenumschlag unterstützenden Ladebaum aufweist. Vorzugsweise ist der Ladebaum teleskopierbar und derart ausgebildet, daß er mit einem freien Ende in ein Transportmittel hineinbewegt werden kann, damit er dem Transportmittel Ausgangsware zuführt bzw. Eingangsware vom Transportmittel abführt. Eine wesentliche Erleichterung des Umschlagvorgangs für den oder die dabei involvierten Personen wird dadurch erreicht, daß der Ladebaum als Ganzes oder in Teilen schwenkbar ist, so daß die jeweilige, die Hängeträger zwischen dem Ladebaum und Haltestangen oder dgl. des Transportmittels umhängende Person (ggf. Fahrer des Lkw) nur eine minimale Strecke zwischen dem Ladebaum bzw. dessen freien Ende und der jeweiligen Haltestange des Transportmittels überbrücken muß. Beispielsweise könnte das Transportmittel, insbesondere Lkw, mit einhängbaren und aushängbaren Querstangen ausgerüstet sein. Im Falle von Eingangswaren würde der Fahrer oder eine andere Person beginnend an der der Ladeöffnung nächsten Stange des Transportmittels diese entleeren durch Umhängen der Eingangsware von der Stange zum Ladebaum, die entleerte Stange aushängen und mit der nächsten Stange fortfahren, bis das Transportmittel vollständig entleert ist. Umgekehrt würde im Falle des Verladens von Ausgangsware zuerst die von der Ladeöffnung entfernteste Stange des Transportmittels durch Umhängen vom Ladebaum auf die Stange gefüllt werden, würde hiernach eine weitere Stange eingehängt und gefüllt werden usw., bis das Transportmittel vollständig beladen ist. Durch die Teleskopierbarkeit des Ladebaums einerseits bzw. durch die Schwenkbarkeit des Ladebaums andererseits kann das freie Ende des Ladebaums stets dorthin bewegt werden, wo eine jeweilige Stange gerade mit Hängeträgern behängt wird bzw. wo Hängeträger von der Stange abgehängt werden. Die das Umhängen durchführende Person kann dabei an einer Stelle stehen bleiben und braucht sich nur entsprechend dem Füllzustand der Querstangen bewegen. Das Schwenken oder/und das Teleskopieren des Ladebaums kann rein manuell erfolgen, indem die Person das freie Ladebaumende ergreift und entsprechend bewegt.

Die Schwenkbarkeit und Teleskopierbarkeit des Ladebaums ist bevorzugt auf die Art der zu beladenen Transportmittel und deren Abmessungen abgestimmt. Für die meisten Fälle wird eine Schwenkbarkeit des Ladebaums in einer Horizontalebene ausreichen. Es ist allerdings zweckmäßig, wenn der Ladebaum überdies höhenverstellbar ist, beispielsweise um ihn auf eine auf die Höhe der Haltestangen des zu beladenden bzw. zu entladenden Transportmittels abgestimmte Höhe einstellen zu können.

Gegenüber einer Schwenkbarkeit des Ladebaums als Ganzes ist es bevorzugt, daß nur ein freies Ende des Ladebaums schwenkbar ist. Vorzugsweise handelt es sich bei dem freien schwenkbaren Ende um einen Teleskopierabschnitt des Ladebaums.

Hinsichtlich des schwenkbaren freien Endes wird weiterhin vorgeschlagen, daß dieses einen Rutschstangenabschnitt, insbesondere eine Rutschstangenschleife, des Ladebaums umfaßt. Die Rutschstangenschleife kann die oben erwähnten Merkmale der Rutschstangenschleife der Umschlagstation aufweisen.

Besonders bevorzugt ist, daß in den Ladebaum eine Mitnahmefördereranordnung integriert ist. Im Falle eines teleskopierbaren Ladebaums kann mehreren Teleskopierabschnitten jeweils ein gesonderter Mitnahmeförderer zugeordnet sein, die beispielsweise über Verbindungsförderer in Verbindung stehen.

Die Mitnahmefördereranordnung des Ladebaums kann in den unverschwenkbaren Teil des Ladebaums integriert sein, so daß am freien Ende ggf. nur eine manuelle Förderung bzw. Förderung unter Ausnutzung von Schwerkraft längs dem Rutschstangenabschnitt vorgesehen sein mag. Es kann aber auch vorteilhaft sein, wenn das schwenkbare freie Ende wenigstens einen eigenen Mitnahmeförderer aufweist oder/und daß wenigstens ein Mitnahmeförderer eine Schwenkgelenkstelle zwischen dem unverschwenkbaren Teil des Ladebaums und dem schwenkbaren freien Ende überbrückt. Durch diese Ausbildung des Ladebaums kann erreicht werden, daß sowohl für Eingangswaren als auch für Ausgangswaren die Förderung der Hängeträger über den gesamten Ladebaum auf maschinelle Weise möglich ist, so daß die das Umhängen durchführende Person entlastet ist und sich dementsprechend eine hohe Umschlagsfrequenz erreichen läßt.

Es wurde bisher nur die Möglichkeit erwähnt, daß das Umschlagen der Eingangswaren bzw. Ausgangswaren an den Hängeträgern durch Umhängen der Hängeträger in der Umschlagstation, also etwa zwischen Ladebaum bzw. Rutschstange einerseits und Haltestangen oder dergleichen des Transportmittels andererseits erfolgt. Es ist aber auch möglich, daß die Hängeträger bei entsprechend ausgebildeten Haltestangen des Transportmittels, beispielsweise Längshaltestangen, unmittelbar zwischen einer umschlagstationseitigen, ggf. schwenkbaren Rutschstange und deroder den transportmittelseitigen Haltestange(n) durch Übergabeschieben übereine für das Umschlagen hergestellte Koppelstelle zwischen Rutschstange und Haltestangen umgeschlagen werden.

Zu den Hängeträgern, die innerhalb des Systems zum Fördern, Lagern und zum Umschlagen der Eingangs- bzw. Ausgangsware dienen, ist noch folgendes auszuführen. Die Hängeträger weisen vorzugsweise jeweils einen hakenähnlichen Einhängabschnitt auf, mit dem sie an eine Förder-/Halteschienenanordnung der Hängefördereranordnung oder/und der Umschlagstation oder/und des Warenspeichers - vorzugsweise ohne Vermittlung eines an der Förder-/Halteschienenanordnung laufenden Fördergutträgers, Trolleys oder dgl. - einhängbar oder eingehängt sind. Der Einhängabschnitt kann bezogen auf eine zur Förderrichtung im wesentlichen orthogonale Querrichtung in eine erste Querrichtung offen und in eine dazu entgegengesetzte zweite Querrichtung geschlossen sein, derart, daß der Hängeträger durch Bewegung in die erste Querrichtung an einem Förder-/Halteschienenabschnitt einhängbar und durch Bewegung in die zweite Querrichtung von einem Förder-/Halteschienenabschnitt abhängbar ist.

Das System kann dafür ausgelegt sein, im Zuge der Förderung der Hängeträger zwischen Warenspeicher und Warenumschlagstation die Querorientierung der Hängeträger in bezug auf eine durch einen Förder-/Halteschienenabschnitt der Förder-/Halteschienenanordnung definierte Längsrichtung zu drehen. Im diesem Zusammenhang sind die erwähnten bidirektionalen Speicher- und Förderstrecken und die erwähnten Ringförderer vorteilhaft.

Es sollte noch klargestellt werden, daß der Warenspeicher des erfindungsgemäßen Systems selbstverständlich auch leere Hängeträger aufnehmen kann, sollte dies gewünscht sein. Dementsprechend kann die Hängefördereranordnung nach Bedarf sowohl leere als auch waretragende Hängeträger fördern. Entsprechend kann im Bedarfsfall auch ein Umschlag von leeren Hängeträgern mittels der wenigstens einen Umschlagstation erfolgen.

Der Warenspeicher kann über die Hängefärdereranordnung oder über eine gesonderte Hängefördereranordnung mit weiteren Bereichen einer übergeordneten Anlage, ggf. Fabrik, in Verbindung stehen, beispielsweise mit Bereichen, die zur Produktion der Ausgangsware dienen. Im Falle, daß der Warenspeicher wenigstens eine an einem Ende bidirektional an der zur Umschlagstation führenden Hängefördereranordnung angeschlossene Speicherstrecke aufweist, ist es bevorzugt, daß die Speicherstrecke am entgegengesetzten Ende bidirektional (zur Abgabe von Eingangsware und zur Übernahme von Angangsware) an einer zu den genannten weiteren Bereichen der übergeordneten Anlage führenden Hängefördereranordnung angeschlossen oder anschließbar ist. Die Fördererverbindung zu den weiteren Bereichen kann dabei für mehrere Speicherstrecken über wenigstens einen gemeinsamen Förderer, insbesondere Ringförderer, der weiteren Hängefördereranordnung hergestellt oder herstellbar sein. Die weitere Hängeförderereinrichtung kann grundsätzlich genauso ausgebildet sein, wie die den Warenspeicher und die wenigstens eine Umsehlagstation verbindende Hängefördereranordnung.

Die Erfindung betrifft ferner einen Ladebaum für den Umschlag von Hängeträgern, beispielsweise zur Verwendung in einem System, wie vorangehend beschrieben. Es wird vorgeschlagen, daß der vorzugsweise eine Mitnahmefördereranordnung aufweisende Ladebaum als Ganzes oder in Teilen schwenkbar ist. Ansonsten kann der Ladebaum so wie vorangehend für den in der Umsohlagstation verwendeten Ladebaum vorgeschlagen ausgebildet sein.

Die Erfindung betrifft ferner eine Übergabeanordnung zur Übergabe von Hängeträgern zwischen mehreren Förderstreckenabschnitten oder/und Haltestreckenabschnitten einer Hängefördereranordnung bzw. Halteanordnung, beispielsweise zur Verwendung innerhalb eines Systems, wie vorangehend beschrieben. Die Übergabeanordnung weist erfindungsgemäß wenigstens eine längs einer Verschiebestrecke in eine Mehrzahl von Übergabepositionen verschiebbare Übergabestation auf, wobei die Übergabepositionen jeweils genau einer Kombination von in Förder- bzw. Übergabeverbindung zu bringenden Förderstrecken- bzw. Haltestreckenabschnitten entsprechen. An einer Übergabeposition können genau eine Paarung oder auch mehrere Paarungen von mittels der Übergabestation verbundenen bzw. verbindbaren Förderstreckenabschnitten möglich sein, letzteres beispielsweise dann, wenn die Übergabestation eine entsprechende Weichenanordnung enthält.

Die Übergabestation stellt an der jeweiligen Übergabeposition eine unidirektionale (monodirektionale) oder - vorzugsweise - eine bidirektionale Förderverbindung zwischen den jeweiligen Förderstrecken bzw. Haltestrecken her. Ferner kann die Übergabestation so ausgebildet sein, wie vorangehend in bezug auf die verschiebbare Übergabestation des erfindungsgemäßen Systems beschrieben.

Die Erfindung wird nun im folgenden anhand von in den Figuren gezeigten Ausführungsbeispielen näher erläutert.
- Fig. 1: zeigt ein Ausführungsbeispiel eines erfindungsgemäßen Waren, Lager-, Förder- und Umschlagsystems für auf Hängeträgern, insbesondere Kleiderbügel, gehaltene Waren (insbesondere Textilien) in einer schematischen Draufsicht mit mehreren Warenspeichern, denen jeweils mehrere, einen jeweiligen Ladebaum aufweisende Umschlagstationen zugeordnet sind.
- Fig. 2: zeigt einen in Fig. 1 nicht erkennbaren Abschnitt des Systems, bei dem mehreren Warenspeichern jeweils nur eine einzige Umschlagstation zugeordnet ist.
- Fig. 3: zeigt einen weiteren, in Fig. 1 nicht gezeigten Abschnitt des Systems, bei dem einem Warenspeicher neben einer einen Ladebaum aufweisenden Umschlagstation auch zwei jeweils eine schleifenförmige Rutschstange aufweisende Umschlagstationen zugeordnet sind.
- Fig. 4: zeigt einen weiteren, in Fig. 1 nicht gezeigten Abschnitt des Systems, in dem einem Warenspeicher drei Umschlagstationen zugeordnet sind, wobei eine Umschlagstation einen teleskopierbaren, ein schwenkbares freies Ende aufweisenden Ladebaum umfaßt, eine Umschlagstation eine teleskopierbare Rutschstange umfaßt und eine Umschlagstation eine schwenkbare Rutschstange umfaßt.
- Fig. 5: zeigt einen weiteren, in Fig. 1 nicht gezeigten Abschnitt des Systems mit mehreren, einem Warenspeicher zugeordneten Umschlagstationen, die mittels einer verschiebbare Übergabestationen aufweisenden Übergabeanordnung mit dem Warenspeicher in Förderverbindung bringbar sind.
- Fig. 6: zeigt, wie kleiderbügelartige Hängeträger in ihren beiden möglichen Querorientierungen an einer Speicherstrecke oder Förderstrecke angeordnet sein können und längs dieser Strecke förderbar sind.

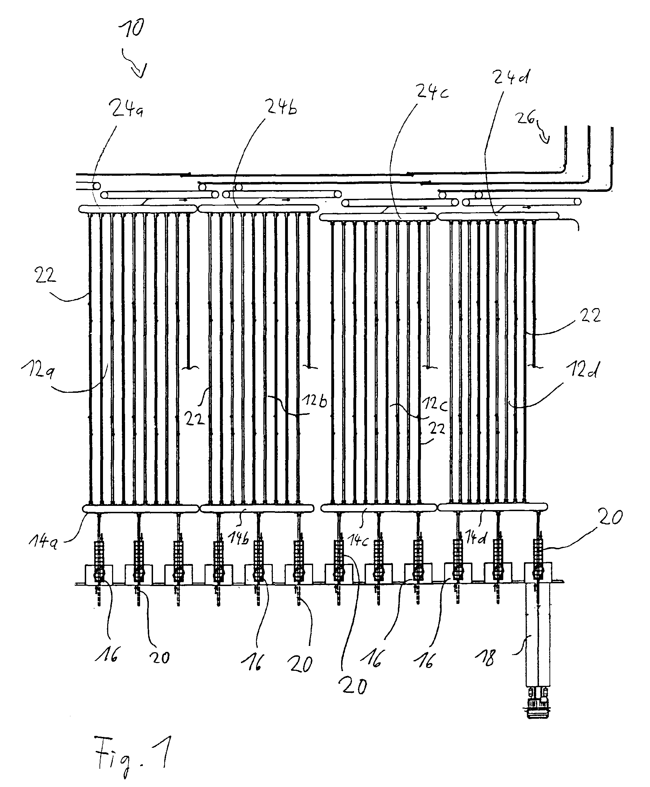

Das in Fig. 1 gezeigte System 10 ist Teil einer übergeordneten Produktionsanlage, beispielsweise einer Fabrik für Textilien. Das System 10 weist mehrere Warenspeicher 12a, 12b, 12c und 12d auf, die wahlweise zur Aufnahme von dem System von außen eingegebenen Eingangswaren und zur Aufnahme von vom System nach außen abzugebenden Ausgangswaren dienen. Die Warenspeicher 12a, 12b, 12c und 12d stehen jeweils über einen Ringförderer 14a, 14b, 14c bzw. 14d mit drei dem jeweiligen Warenspeicher zugeordneten Umschlagstationen 16 in Förderverbindung. Die Umschlagstationen, die auch als (Eingangs-/Ausgangs-) Tor bezeichenbar sind, dienen wahlweise zum Umschlag von Eingangswaren und zum Umschlag von Ausgangswaren, geben also Ausgangswaren an ein externes Transportmittel ab, beispielsweise an einen Lkw 18, oder an sonstige Transportmittel, wie etwa einen Container oder sog. Koffer. Hierzu weisen die Umschlagstationen 16 sogenannte Ladebäume 20 auf, die die Ausgangsware, genauer die die Ausgangsware tragenden Hängeträger, dem Laderaum des Transportmittels zuführen bzw. von dort die Eingangsware, genauer die Eingangsware tragende Hängeträger, abführen. Hierzu ist den in Fig. 1 gezeigten Ladebäumen jeweils eine Mitnahmefördereranordnung zugeordnet, die die jeweilige Ware vom die Verbindung zwischen dem Warenspeicher und der Ausgangsstation herstellenden, als Mitnahmeförderer ausgebildeten Ringförderer übernehmen und zum transportmittelseitigen freien Ende des Ladebaums zuführen bzw. dem Ladebaum, insbesondere dem freien Ladebaumende übergebene Eingangsware an diesen Ringförderer weitergeben. Bei den Ladebäumen kann es sich um teleskopierbare oder/und schwenkbare Ladebäume handeln, wie später noch näher erläutert wird.

Die Warenspeicher weisen jeweils mehrere Speicherstrecken 22 auf, die parallel zueinander angeordnet sind. Die hier vorgenommene Zuordnung der (auch als Haltestrecken bezeichenbaren) Speicherstrecken 22 zu verschiedenen Warenspeichern 12a, 12b, 12c und 12d entsprechend ihres Anschlusses an einem jeweiligen Ringförderer 14a, 14b, 14c bzw. 14d ist willkürlich. Man könnte auch alle Speicherstrecken 22 als Speicherstrecken eines einzigen, entsprechend größeren Warenspeichers auffassen.

Die Speicherstrecken 22 sind an einem Ende bidirektional mit dem jeweiligen Ringförderer 14a, 14b, 14c bzw. 14d verbunden. Bidirektional heißt, daß die Speicherstrecken an einer der zugeordneten Umschlagstationen umgeschlagene Eingangsware vom Ringförderer übernehmen können und Ausgangsware an den Ringförderer zum Transport zu einer der zugeordneten Umschlagstationen übergeben können. Am anderen Ende sind die Speicherstrecken an einem Ringförderer 24a, 24b, 24c bzw. 24d einer weiteren Fördereranordnung 26 bidirektional angeschlossen, die den Warenspeicher mit weiteren Bereichen der übergeordneten Anlage verbindet. Bidirektionaler Anschluß heißt in diesem Fall, daß die Speicherstrecken Eingangswaren über die weitere Fördereranordnung 26 zu den anderen Bereichen der Anlage abgeben können und Ausgangsware von den anderen Bereichen der Änlage übernehmen können. Die Speicherstrecken 22 können also jeweils wahlweise Eingangsware oder Ausgangsware speichern (lagern).

Die Förderer (Hängeförderer) und die Speicherstrecken können jeweils unter Verwendung herkömmlicher Mitnahmeförderer mit einem Band, einem Gurt, einer Kette oder dgl. als Mitnahmeelement ausgebildet sein. Vorzugsweise greift das Mitnahmeelement ohne Vermittlung eines an Laufschienen oder dergleichen geführten Fördergutträgers oder -trolleys direkt oder indirekt an auf Halte- oder Förderschienen hängegeführten Hängeträgern an.

Die in Fig. 1 gezeigte Ausführungsform zeichnet sich dadurch aus, daß die Speicherstrecken jeweils für eine Bewegung von Hängeträgern samt daran gehaltener Ware in beiden Richtungen längs der Speicherstrecke ausgebildet sind. Hierfür weist die jeweilige Speicherstrecke eine Mitnahmefördereranordnung auf, bei der zwei in entgegengesetzte Förderrichtungen laufende Mitnahmeelementtrume parallel zueinander längs der Speicherstrecke geführt sind. Die Mitnahmeelementtrume weisen allerdings einen solchen Abstand voneinander auf, daß nur jeweils eines der beiden Mitnahmeelementtrume Hängeträger fördern kann. Es ist deshalb zweckmäßig, beide Mitnahmeelementtrume einer gemeinsamen Speicherstrecke zuzuordnen, die entweder Eingangswaren oder Ausgangswaren aufnimmt. Es wäre grundsätzlich aber auch möglich, die Speicherstrecken derart auszubilden, daß beide Mitnahmetrume gleichzeitig Hängeträger fördern können. In diesem Fall könnte man genauso gut auch von zwei gesonderten Speicherstrecken sprechen, von denen die eine Eingangsware und die andere Ausgangsware aufnimmt. Vorzugsweise ist aberdie Bewegungsrichtung der Mitnahmeelementtrume umschaltbar, so daß die Zuordnung der Eingangswaren und der Ausgangswaren zu den Speicherstrecken wählbar ist. Durch Umschalten der Förderrichtung der Mitnahmefördereranordnung der Speicherstrecke sowie der Förderrichtung der übrigen Mitnahmeförderer (Mitnahmeförderer der Ringförderer und der Ladebäume) ist es möglich, Hängeträger, die wie Kleiderbügel einen in Querrichtung unsymmetrischen Einhängabschnitt aufweisen und dementsprechend eine vorgegebene Orientierung relativ zu einem Haltestrecken- bzw. Förderstreckenabschnitt einnehmen müssen, in einer beliebigen der beiden möglichen Orientierungen (vgl. Fig. 6) zu fördern und zu speichern. Im folgenden wird aber davon ausgegangen, daß für die verschiedenen Mitnahmeförderer jeweils eine vorgegebene Förderrichtung vorgesehen ist, die durch Pfeile in den Figuren angedeutet ist.

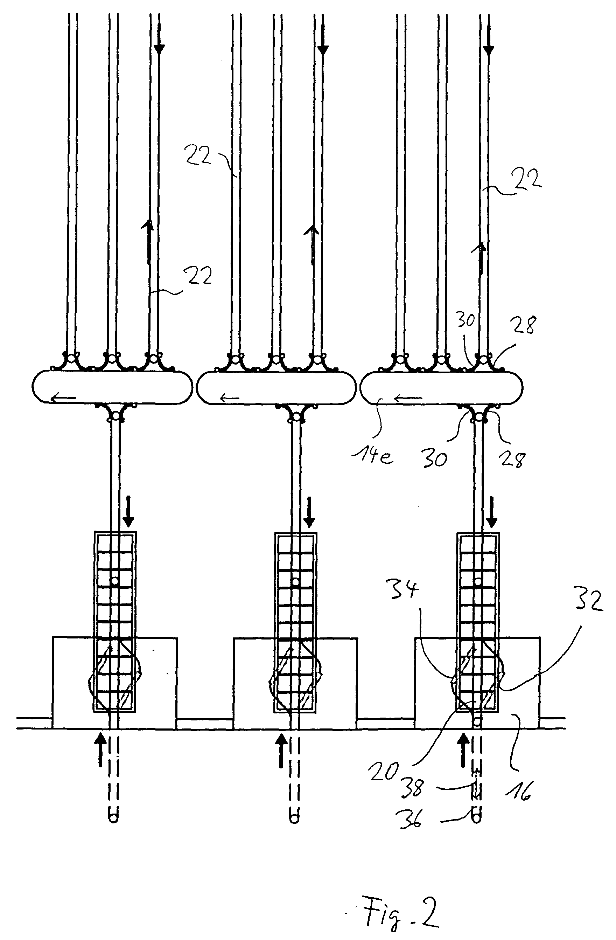

Die Speicherstrecken bzw. die Mitnahmeförderer der Speicherstrecken und auch die Mitnahmeförderer der Umschlagstationen können unmittelbar an dem gemeinsamen Ringförderer angeschlossen sein, wie dies in Fig. 1 und in der einen anderen Abschnitt des Systems zeigenden Fig. 2 zu erkennen ist. Der unmittelbar Anschluß kann über im Fachgebiet übliche Koppelglieder, ggf. Verbindungsförderer, hergestellt sein, beispielsweise durch unter Schwerkraftausnutzung fördernde Rutschstangen oder geeignete Zwangsförderer (ggf. Mitnahmeförderer). Es ist zweckmäßig, neben einem "aktiven" Zwangsförderer für die eine Transportrichtung einen "passiven" Förderer, ggf. Rutschstangenförderer, für die andere Transportrichtung zu verwenden, um die jeweilige Speicherstrecke 22 und die jeweilige Umschlagstation an dem gemeinsamen Ringförderer anzuschließen. Um dies zu verdeutlichen, wurden in Fig. 2 für den Mitnahmeförderer der rechten Umschlagstation 16 sowie für die ganz rechts liegende Speicherstrecke 22 die die Verbindung mit dem Ringförderer 14e herstellenden Zwischenförderer mit 28 für Zwangsförderer und 30 für Rutschstangenförderer bezeichnet.

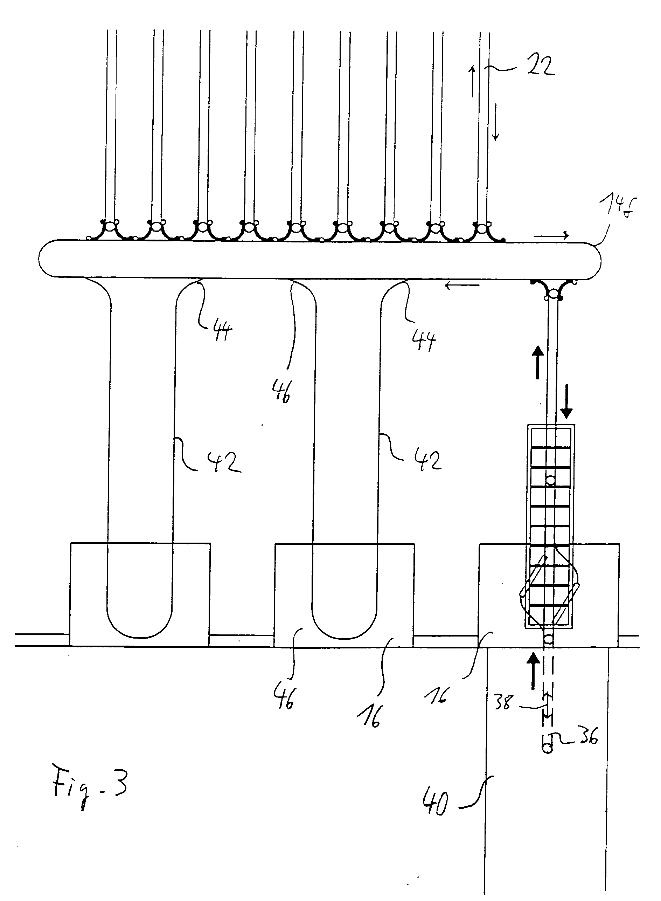

Bei den Ladebäumen kann es sich, wie schon erwähnt, um teleskopierbare Ladebäume 20 handeln. Dabei ist es möglich, eine Mitnahmefördereranordnung des teleskopierbaren Ladebaums derart auszubilden, daß ein Mitnahmeförderer sich mit seinem Mitnahmeelement über mehrere Teleskopierabschnitte des Ladebaums erstreckt. Eine andere, in den Figuren (vgl. beispielsweise Fig. 2) angedeutete Möglichkeit ist, für verschiedene Teleskopierabschnitte gesonderte Mitnahmeförderer vorzusehen, die über Verbindungsförderer in Verbindung stehen. Die in den Figuren nur schematisch angedeuteten Verbindungsförderer sind in Fig. 2 für den rechten Ladebaum mit 32 und 34 bezeichnet. Diese Verbindungsförderer stellen eine Verbindung zwischen den einzelnen, beispielsweise auf verschiedenen Ebenen laufenden Mitnahmeförderern her. Die Teleskopierbarkeit des Ladebaums, also die Verlagerbarkeit wenigstens des freien Endes 36 des Ladebaums längs einer Ladebaumachse ist für den rechten Ladebaum in Fig. 2 (und für den rechten Ladebaum in Fig. 3) durch einen Doppelpfeil 38 angedeutet. Die übrigen Pfeile in den Fig. 1 bis 3 kennzeichnen die Förderrichtung längs der Mitnahmeförderer.

In Fig. 3 ist gezeigt, wie ein Transportmittel 40, beispielsweise der Ladeaufbau eines Lastkraftwagens oder ein Container oder sog. Koffer (diese werden nach Entladung oder/und Befüllung mittels eines gesonderten Lastkraftwagens abtransportiert) an der rechten Umschlagstation 16 angedockt ist. Durch die Teleskopierbarkeit des Ladebaums können in das Transportmittel zu übergebende Hängeträger weit in den Ladebereich des Transportmittels hinein zugeführt werden, so daß eine die Hängeträger vom Ladebaum abhängende und an Haltestangen des Transportmittels anhängende Person zwischen dem Ladebaum und der jeweiligen Haltestange nur einen geringen Weg zurücklegen muß. Das freie Ende des Ladebaums kann alternativ oder zusätzlich zu einem Abschnitt der ladebaumseitigen Mitnahmefördereranordnung einen Rutschstangenabschnitt aufweisen. Für einen einfachen Anschluß der Rutschstange an der Mitnahmefördereranordnung sowohl im Hinblick auf ein Übernehmen von Ausgangsware als auch auf ein Übergeben von Eingangsware ist der Rutschstangenabschnitt vorzugsweise schleifenförmig, wobei eine Förderung der Hängeträger längs der Rutschstangenschleife unter Einwirkung von Schwerkraft oder/und durch manuelles Schieben erfolgen kann, wenn nicht eine maschinelle Förderung längs der Rutschstange vorgesehen ist.

Man kann, wie in Fig. 3 gezeigt ist, auch Umschlagstationen ohne maschinell fördernden Ladebaum ausbilden. Fig. 3 zeigt eine insbesondere für den Umschlag in geringeren Mengen geeignete Variante mit einer jeweiligen schleifenförmigen Rutschstange 42. Die Rutschstange übernimmt an einem ersten Ende 44 beispielsweise über eine entsprechende Weichenanordnung Eingangsware vom Ringförderer 14f. Die Eingangsware wird dann vorzugsweise durch Schwerkrafteinwirkung bis in einen Verladebereich 46 der Umschlagstation 16 gefördert, wo sie manuell von der Rutschstange 42 abgehängt und auf entsprechende Stangen eines der Umschlagstation zugeordneten Transportmittels eingehängt wird. Umgekehrt werden im Falle von Eingangswaren die Hängeträger von Haltestangen des Transportmittels auf die Rutschstangenschleife 42 umgehängt und dann beispielsweise durch manuelles Übergabeschieben über eine am anderen Ende 46 der Rutschstangenschleife 42 vorgesehene Weichenanordnung oder dgl. an den Ringförderer 14f übergeben.

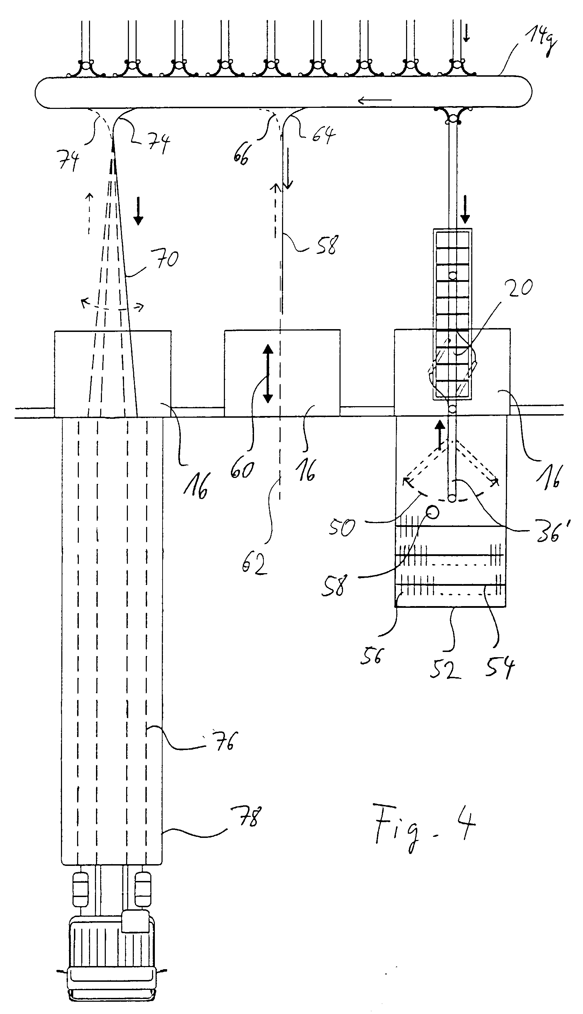

In Fig. 4 sind weitere Varianten der Ausbildung der Umschlagstationen veranschaulicht. Der Ladebaum 20 der rechten Umschlagstation 16 weist ein schwenkbares freies Ende 36' auf. Beispielsweise kann es sich bei dem schwenkbaren freien Ende um einen Rutschstangenschleifenabschnitt oder/und Teleskopierabschnittdes Ladebaums handeln. Die Schwenkbarkeit des freien Endes 36' ist gestrichelt und durch einen bogenförmigen Doppelpfeil 50 angedeutet. An der Umschlagstation 16 ist ein Container (Koffer) 52 mit ein- und aushängbaren Querhaltestangen 54 angeordnet. Die Querhaltestangen 54 dienen zur Aufnahme von Hängeträgern 56 wie Kleiderbügel. Beim Umhängen von Hängeträgern samt daran gehaltener Ware vom freien Ende 36' auf eine jeweilige Querhaltestange bzw. von einer jeweiligen Querhaltestange auf das freie Ende 36' sorgt die Schwenkbarkeit dafür, daß eine das Umhängen vornehmende Person 58 sich nur entsprechend dem Füllzustand der jeweiligen Querstange 54 bewegen muß, also für das Umhängen keine wesentliche Strecke zwischen dem freien Ende 36' und der jeweiligen Querstange überbrücken muß. Im Zusammenhang mit der Teleskopierbarkeit des Ladebaums ist damit das Umschlagen deutlich erleichtert und weniger zeitaufwendig.

Von den drei Umschlagstationen 16 der Fig. 4 ist die mittlere Umschlagstation 16 besonders einfach ausgebildet. Es ist einfach eine teleskopierbare Rutschstange 58 vorgesehen. Die Teleskopierbarkeit ist durch ein gestrichelt dargestelltes, gemäß dem Pfeil 60 verschiebbares freies Ende 62 angedeutet. Die Rutschstange könnte beispielsweise nur für die Übernahme von Ausgangswaren oder nur für die Übernahme von Eingangswaren an dem Ringförderer 14g angeschlossen sein. Der Anschluß zur Übernahme von Ausgangswaren ist in Fig. 4 bei 64 in durchgezogener Darstellung angedeutet. Bevorzugt besteht aber auch ein Anschluß der Rutschstange 58 am Ringfärderer 14g zur Übergabe von Eingangswaren, wie bei 66 gestrichelt angedeutet ist, so daß für die in Fig. 4 eingezeichnete Förderrichtung des Ringförderers 14g sowohl Ausgangswaren vom Ringförderer übernommen, als auch Eingangswaren an den Ringförderer übergeben werden können, also ein bidirektionaler Anschluß der Rutschstange am Förderer besteht.

Eine schwenkbare Ausbildung der Rutschstange einer Umschlagstation ist bei der linken Umschlagstation 16 der Fig. 4 schematisch angedeutet. Diese Schwenkbarkeit ist bevorzugt mit einer Teleskopierbarkeit der Rutschstange 70 kombiniert. Die Rutschstange kann unidirektional (entweder zur Übernahme von Ausgangswaren oder zur Übergabe von Eingangswaren) mit dem Ringförderer 14g verbunden sein oder bidirektional (zur Übernahme von Ausgangsware und zur Übergabe von Eingangsware) wie bei 72 und 74 angedeutet ist.

Die schwenkbare Rutschstange 70 kann dazu verwendet werden, eine direkte Übergabeschiebeverbindung mit Längshaltestangen 76 eines Containers oder Lastkraftwagens 78 herzustellen, um ohne Umhängen von Hängeträgern diese einfach durch Übergabeschieben zwischen der Umschlagstation und dem Transportmittel zu transferieren.

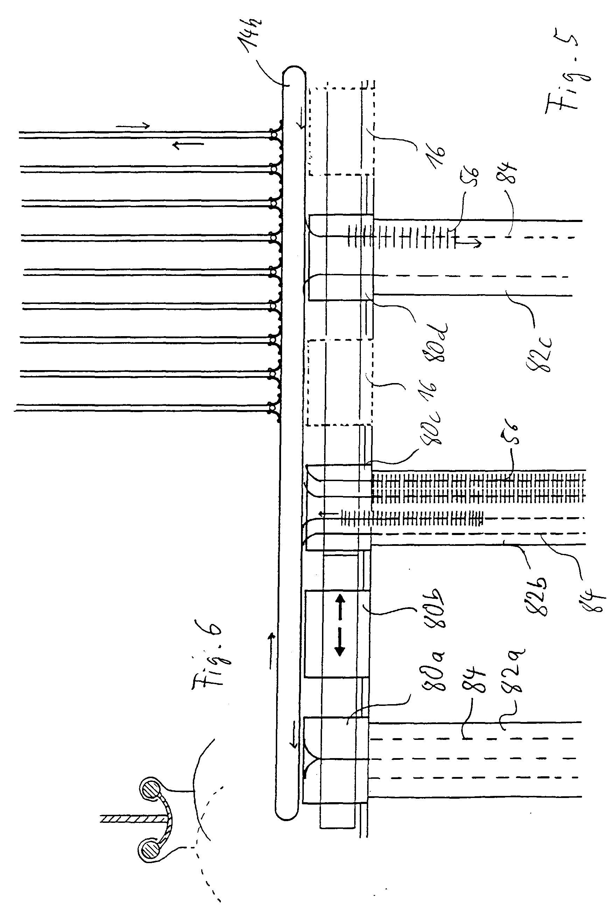

Bei den bisher behandelten Varianten der Figuren 1 bis 4 sind die verschiedenen Halte- und Förderstrecken (Speicherstrecken, Rutschstangen, Mitnahmeförderer usw.) über stationäre Übergabeanordnungen, ggf. Weichen, an dem jeweiligen Ringförderer 14 angeschlossen. Ein solcher Anschluß kann aber auch über eine verschiebbare, eine Weichenfunktion erfüllende Übergabestation erfolgen, wie in Fig. 5 veranschaulicht ist. Hier sind mehrere Übergabestationen (auch als verschiebbare Weiche bezeichenbar) 80a, 80b, 80c und 80d einerseits einem gemeinsamen Ringförderer 14h und andererseits mehreren Umschlagstationen 16 zugeordnet, wobei im Beispielsfall die Zahl der zugeordneten Umschlagstationen die Zahl der verschiebbaren Übergabestationen 80 übersteigt. Es könnte auch so sein, daß allen Umschlagstationen 16 nur eine einzige Übergabestation 80 zugeordnet ist.

Durch Verschieben einer Übergabestation an eine Übergabeposition, die einer gewählten Umschlagstation zugeordnet ist, wird diese Übergabestation an den Ringförderer 14k bidirektional angeschlossen, so daß Ausgangswaren an ein Transportmittel abgebbar und Eingangswaren von einem Transportmittel übernehmbar sind.

An einer Übergabeposition kann die Übergabestation 80 noch zwischen mehreren Subpositionen verschiebbar sein, um beispielsweise eine bestimmte aus mehreren Halte- oder Förderstrecken der Übergabestation im Sinne eines Anschlusses am Ringförderer 14h auszuwählen. Dies ist in Fig. 5 für den Spezialfall eines unmittelbaren Anschlusses von Längshaltestangen 84 von Transportmitteln 82a, 82b und 82c an dem Ringförderer 14h gezeigt, so daß ähnlich wie im Falle der linken Umschlagstation 16 der Fig. 4 eine Überführung von Hängeträgern 56 zwischen Transportmittel und System ohne Umhängen möglich ist.

In Fig. 5 ist gezeigt, wie über die Übergabestation 80d eine Gruppe von Ausgangswaren tragenden Hängeträgern an das Transportmittel 82c übergeben wird. Ferner ist gezeigt, wie über die Übergabestation 80c Eingangswaren tragende Hängeträger gruppenweise dem Ringförderer 14h zugeführt werden. Die Übergabestation 80c ist derart ausgebildet, daß sie zwei parallele Überführungsstrecken für Eingangswaren und zwei gesonderte, parallele Überführungsstrecken für Ausgangswaren aufweist. Um das Transportmittel 82b vollständig zu entladen, muß nach Beendigung der Entladung der beiden linken Längshaltestangen 84 des Transportmittels die Übergabestation 80c nach rechts verschoben werden, um auch die beiden rechten Längshaltestangen84 zu entladen. Für das Beladen des Transportmittels 82b ist der Ablauf entsprechend. Die Übergabestation 80c befindet sich gemäß der Darstellung in Fig. 5 in einer Position, in der den beiden rechten Längshaltestangen 84 Ausgangsware haltende Hängeträger zugeführt werden könnten, sofern auf den Längshaltestangen noch Platz wäre. Fig. 5 könnte in bezug auf das Transportmittel 82b deshalb auch so aufgefaßt werden, daß die von den beiden rechten Haltestangen 84 gehaltenen Hängeträger Ausgangswaren tragen, die gerade aus dem System übernommen wurden.

Im Falle der Übergabestation 80d ist die Möglichkeit gezeigt, daß diese nur eine einzige Übergabestrecke für Ausgangswaren und eine einzige Übergabestrecke für Eingangswaren aufweist. Im Falle der Übergabestation 80a ist schematisch angedeutet, daß diese eine einzige Übergabestrecke aufweist, die sowohl Ausgangswaren vom Ringförderer 14h übernehmen als auch Eingangswaren an den Ringförderer 14h übergeben kann. Die rechte Umschlagstation 16 sowie die dritte Umschlagstation 16 von rechts sind momentan nicht am Ringförderer 14h angeschlossen. Um diese Umschlagstationen mit dem Ringförderer 14h in Förderverbindung zu bringen, muß einer der verschiebbaren Übergabestationen 80a, 80b, 80c und 80d in die der jeweiligen Umschlagstation zugeordnete, in Fig. 5 gestrichelt angedeutete Übergabeposition verschoben werden.

Zusammenfassend betrifft die Erfindung ein Waren-, Lager-, Förder- und Umschlagsystem für auf Hängeträgern, insbesondere Hängebügeln, gehaltene Waren. Das System weist wenigstens eine Umschlagstation auf, die sowohl als Eingangsstation für in das System einzugebende Eingangswaren als auch als Ausgangsstation für vom System an ein externes Transportmittel abzugebende Ausgangswaren nutzbar ist. Die Umschlagstation ist die über eine Hängefördereranordnung an einem Warenspeicher angeschlossen oder anschließbar, der sowohl als Eingangswaren aufnehmender Eingangsspeicher als auch als Ausgangswaren aufnehmender Ausgangsspeicher nutzbar ist.

## Patentansprüche

1. Waren-, Lager-, Förder- und Umschlagsystem (10) für auf Hängeträgern (56), insbesondere Hängebügeln (ggf. Kleiderbügeln) gehaltene Waren, insbesondere Textilien, umfassend:
- wenigstens einen Warenspeicher (12) mit mindestens einer Speicherstrecke (22), ggf. einem Speicherring, die Hängeträger (56) samt daran gehaltener Ware aufnimmt,
- wenigstens eine Warenumschlagstation (16) zum Umschlagen von Hängeträgern (56) samt daran gehaltener Ware zwecks Übergang der Waren zwischen dem System (10) und einem externen Transportmittel (18, 40, 52, 78, 82a, 82b, 82c), insbesondere Lastkraftwagen oder/und Transportcontainer,
- eine Hängefördereranordnung (14) mit wenigstens einem Hängeförärderer (14) zum Fördern der Hängeträger (56) längs wenigstens einer Färderstrecke des Systems zwischen dem Warenspeicher (12) und der Warenumschlagstation (16),
dadurch gekennzeichnet,
- daß die Umschlagstation (16) derart ausgebildet ist, daß sie sowohl als Eingangsstation nutzbar ist, die ins System (10) einzugebende Eingangswaren vom externen Transportmittel übernimmt, als auch als Ausgangsstation nutzbar ist, die nach außen abzugebende Ausgangswaren an das externe Transportmittel übergibt, und
- daß die Hängefördereranordnung (14) und der Warenspeicher (12) derart ausgebildet sind, daß der Warenspeicher sowohl als über die Warenumschlagstation (16) ins System eingegebene Eingangswaren aufnehmender Eingangsspeicher als auch über die Warenumschlagstation nach außen abzugebende Ausgangswaren aufnehmender Ausgangsspeicher nutzbar ist.

2. System nach Anspruch 1, dadurch gekennzeichnet, daß wenigstens eine Speicherstrecke (22) des Warenspeichers (12) derart an der Hängefördereranordnung (14) angeschlossen ist, daß die Speicherstrecke Eingangswaren von der Hängefördereranordnung übernehmen kann und Ausgangswaren an die Hängefärdereranordnung abgeben kann (bidirektionaler Anschluß an der Hängefördereranordnung).

3. System nach Anspruch 1 oder 2, dadurch gekennzeichnet, daß wenigstens eine Förderstrecke (14) der Hängefördereranordnung (14) dafür ausgelegt ist, sowohl Eingangswaren in Richtung zum Warenspeicher (12) zuzuführen als auch Ausgangswaren in Richtung zur Warenumsohlagstation (16) abzuführen.

4. System nach einem der Ansprüche 1 bis 3, dadurch gekennzeichnet, daß wenigstens eine Speicherstrecke (22) des Warenspeichers (12) für eine Bewegung von Hängeträgern (56) samt daran gehaltener Ware in beiden Richtungen längs der Speicherstrecke (22) ausgebildet ist.

5. System nach Anspruch 4, dadurch gekennzeichnet, daß die Speicherstrecke (22) an einem Ende bidirektional (zur Übernahme von Eingangsware und zur Abgabe von Ausgangsware) an der Hängefördereranordnung (14) angeschlossen ist, ggf. an einem Ringförderer (14) der Hängefördereranordnung.

6. System nach einem der vorangehenden Ansprüche, dadurch gekennzeichnet, daß mehrere Speicherstrecken (22) des Warenspeichers mit einer gemeinsamen Umschlagstation (16) oder mit mehreren gemeinsamen Umschlagstationen (16) bidirektional (zur Übernahme von Eingangsware und zur Abgabe von Ausgangsware) in Förderverbindung stehen oder bringbar sind oder/und daß mehrere Umschlagstationen (16) mit einer oder mehreren Speicherstrecken (22) des Warenspeichers (12) bidirektional (zum Empfang von Ausgangsware und zur Übergabe von Eingangsware) in Förderverbindung stehen oder bringbar sind.

7. System nach Anspruch 6, dadurch gekennzeichnet, daß die Förderverbindung über wenigstens einen gemeinsamen Förderer, insbesondere Ringförderer (14), der Hängefördereranordnung hergestellt oder herstellbar ist, wobei vorzugsweise eine Übergabeanordnung (28, 30; 80a, 80b, 80c, 80d) vorgesehen ist, mittels der gezielt eine bidirektionale Förderverbindung zwischen einer bestimmten Speicherstrecke einerseits und einer bestimmten Umschlagstation bzw. einem der Umschlagstation für den Warenumschlag zugeordneten Transportmittel oder/und einer bestimmten Förderstrecke bzw. Halteanordnung der Umschlagstation bzw. eines/des der Umschlagstation für den Warenumschlag zugeordneten Transportmittels andererseits einstellbar ist.

8. System nach Anspruch 7, dadurch gekennzeichnet, daß die Übergabeanordnung eine Mehrzahl von gesonderten, stationär angeordneten und jeweils genau einer Speicherstrecke bzw. Umschlagstation (16) im Sinne eines bidirektionalen Anschlusses der Speicherstrecke, der Umschlagstation, des Transportmittels, der Förderstrecke bzw. der Halteanordnung an den gemeinsamen Förderer (14e) zugeordneten Übergabestationen (28, 30) umfaßt.

9. System nach Anspruch 7 oder 8, dadurch gekennzeichnet, daß die Übergabeanordnung wenigstens eine längs einer Verschiebestrecke in eine Mehrzahl von Übergabepositionen verschiebbare Übergabestation (80a, 80b, 80c, 80d) umfaßt, wobei die Übergabepositionen jeweils wenigstens einer, ggf. genau einer bestimmten Speicherstrecke bzw. Umschlagstation (16) oder/und Förderstrecke bzw. Halteanordnung im Sinne eines bidirektionalen Anschlusses am gemeinsamen Förderer (14h) zugeordnet sind.

10. System nach Anspruch 9, dadurch gekennzeichnet, daß die Übergabestation (80) dafür geeignet ist, eine direkte Hängeträgerübergabeverbindung zwischen Haltestangen (84) des der Umschlagstation zugeordneten Transportmittels (82) und dem gemeinsamen Förderer (14h) herzustellen.

11. System nach einem der vorangehenden Ansprüche, dadurch gekennzeichnet, daß wenigstens ein Hängeförderer der Hängefördereranordnung oder/und wenigstens ein Hängeförderer einer Umschlagstation oder/und wenigstens ein Hängeförderer des Warenspeichers als Mitnahmeförderer mit einem direkt oder indirekt an zu fördernden Hängeträgern angreifenden, langgestreckten Mitnahmeelement, insbesondere Band, Gurt, Seil oder Kette, ausgebildet ist.

12. System nach Anspruch 11, dadurch gekennzeichnet, daß das Mitnahmeelement unter Ausbildung zweier parallel längs einer gemeinsamen Förderstrecke bzw. Speicherstrecke geführten, in entgegengesetzte Förderrichtungen laufenden und zur Förderung von Hängeträgern längs der Förderstrecke bzw. Speicherstrecke geeigneten Mitnahmeelementtrume in einer Endlosschleife geführt ist, wobei die beiden Mitnahmeelementtrume vorzugsweise in Horizontalrichtung gegeneinander versetzt sind und höchstvorzugsweise wenigstens näherungsweise in einer gemeinsamen Horizontalebene verlaufen.

13. System nach Anspruch 11 oder 1 2, dadurch gekennzeichnet, daß die Förderrichtung des Mitnahmeförderers umschaltbar ist.

14. System nach einem der vorangehenden Ansprüche, dadurch gekennzeichnet, daß wenigstens eine Umschlagstation einen Hängeförderer in Form einer Rutschstange (42; 58; 70) aufweist, die an der Hängefördereranordnung angeschlossen oder anschließbar ist, derart, daß Hängeträger von der Hängefördereranordnung automatisiert an die Rutschstange übergebbar oder/und von der Rutschstange automatisiert oder/und durch manuelles Übergabeschieben an die Hängefördereranordnung (14) übergebbar sind.

15. System nach Anspruch 14, dadurch gekennzeichnet, daß die Rutschstange als Rutschschleife (42) ausgeführt ist, die sowohl an einem ersten Schleifenende (44) als auch an einem zweiten Schleifenende (46) an der Förderanordnung (14f) angeschlossen oder anschließbar ist.

16. System nach einem der vorangehenden Ansprüche, dadurch gekennzeichnet, daß wenigstens eine Umachlagstation einen höhenverstellbaren oder/und als Ganzes oder in Teilen schwenkbaren, vorzugsweise teleskopierbaren Ladebaum (20) aufweist, wobei der Ladebaum vorzugsweise wenigstens in einer Horizontalebene schwenkbar ist.

17. System nach Anspruch 16, dadurch gekennzeichnet, daß ein freies Ende (36') des Ladebaums (20) schwenkbar ist, wobei vorzugsweise das freie schwenkbare Ende ein Teleskopierabschnitt des Ladebaums ist oder/und einen Rutschstangenabschnitt, insbesondere eine Rutschstangenschleife, des Ladebaums umfaßt.

18. System nach Anspruch 16 oder 17, dadurch gekennzeichnet, daß in den Ladebaum eine Mitnahmefördereranordnung integriert ist, wobei im Falle eines teleskopierbaren Ladebaums mehreren Teleskopierabschnitten ggf. jeweils ein gesonderter Mitnahmeförderer zugeordnet ist.

19. System nach Anspruch 17 und 18, dadurch gekennzeichnet, daß die Mitnahmefördereranordnung des Ladebaums in den unverschwenkbaren Teil des Ladebaums integriert ist.

20. System nach Anspruch 17 und 18, dadurch gekennzeichnet, daß das schwenkbare freie Ende wenigstens einen eigenen Mitnahmeförderer aufweist oder/und daß wenigstens ein Mitnahmeförderer eine Schwenkgelenkstelle zwischen dem unverschwenkbaren Teil des Ladebaums und dem schwenkbaren freien Ende überbrückt.

21. System nach einem der vorangehenden Ansprüche, dadurch gekennzeichnet, daß die Hängeträger jeweils einen vorzugsweise hakenähnlichen Einhängabschnitt aufweisen, mit dem sie an eine Förder-/Halteschienenanordnung der Hängefördereranordnung (14) oder/und der Umschlagstation (16) oder/und des Warenspeichers (12) - vorzugsweise ohne Vermittlung eines an der Förder-/Halteschienenanordnung laufenden Fördergutträgers, Trolleys oder dgl. - einhängbar oder eingehängt sind.

22. System nach Anspruch 21, dadurch gekennzeichnet, daß der Einhängabschnitt bezogen auf eine zur Förderrichtung im wesentlichen orthogonale Querrichtung in eine erste Querrichtung offen und in eine dazu entgegengesetzte zweite Querrichtung geschlossen ist, derart, daß der Hängeträger durch Bewegung in die erste Querrichtung an einem Förder-/Halteschienenabschnitt einhängbar und durch Bewegung in die zweite Querrichtung von einem Förder-/Halteschienenabschnitt abhängbar ist.

23. System nach Anspruch 22, dadurch gekennzeichnet, daß das System (10) dafür ausgelegt ist, im Zuge der Förderung der Hängeträger zwischen Warenspeicher und Warenumschlagstation die Querorientierung der Hängeträger in bezug auf eine durch einen Förder-/Halteschienenabschnitt der Förder-/Halteschienenanordnung definierte Längsrichtung zu drehen.

24. Ladebaum für den Umschlag von Hängeträgern, dadurch gekennzeichnet, daß der Ladebaum (20) als Ganzes oder in Teilen schwenkbar ist.

25. Ladebaum nach Anspruch 24, gekennzeichnet durch die sich auf den Ladebaum beziehenden Merkmale wenigstens eines der Ansprüche 1 - 23, ggf. in Verbindung mit sich auf die Hängeträger beziehenden Merkmalen wenigstens eines der Ansprüche 1 - 23.

26. Übergabeanordnung zur Übergabe von Hängeträgern zwischen mehreren Förderstreckenabschnitten oder/und Haltestreckenabschnitten einer Hängefördereranordnung bzw. Halteanordnung, gekennzeichnet durch wenigstens eine längs einer Verschiebestrecke in eine Mehrzahl von Übergabepositionen verschiebbare Übergabestation (80a, 80b, 80c, 80d), wobei die Übergabepositionen jeweils genau einer Kombination von in Förder- bzw. Übergabeverbindung zu bringenden Färderstrecken- bzw. Haltestreckenabschnitten entsprechen.

27. Übergabeanordnung nach Anspruch 26, dadurch gekennzeichnet, daß die Übergabestation an der jeweiligen Übergabeposition eine unidirektionale oder bidirektionale Förderverbindung zwischen den jeweiligen Förderstrecken bzw. Haltestrecken herstellt.

28. Übergabeanordnung nach Anspruch 26 oder 27, gekennzeichnet durch die sich auf die Übergabeanordnung beziehenden Merkmale wenigstens eines der Ansprüche 1 - 23, ggf. in Verbindung mit sich auf die Hängeträger beziehenden Merkmalen wenigstens eines der Ansprüche 1 - 23.
